# EUROPEAN PATENT SPECIFICATION

(11) **EP 3 144 934 B1**
(45) Date of publication and mention of the grant of the patent: **13.02.2019**
(21) Application number: 14894976.1
(22) Date of filing: 13.08.2014
(51) Int. Cl.: G11B 20/00, G11B 20/10, G06F 1/32, G06F 3/16, G10L 19/16

(54) **AUDIO PLAY METHOD AND DEVICE**
AUDIOWIEDERGABEVERFAHREN UND -VORRICHTUNG
PROCÉDÉ ET DISPOSITIF DE LECTURE AUDIO

(30) Priority: 18.06.2014 CN 201410273600
(43) Date of publication of application: 22.03.2017
(73) Proprietor: ZTE Corporation, Shenzhen City, Guangdong 518057 (CN)
(72) Inventor: ZHANG, Shuyan, Shenzhen Guangdong 518057 (CN); QI, Bo, Shenzhen Guangdong 518057 (CN); ZHANG, Bo, Shenzhen Guangdong 518057 (CN)
(74) Representative: Savi, Massimiliano
(86) International application number: PCT/CN2014/084313
(87) International publication number: WO 2015/192451

(56) References cited:
- EP-A1- 2 175 450
- WO-A2-02/45319
- CN-A- 1 395 192
- CN-A- 1 464 685
- CN-A- 101 404 741
- US-A1- 2005 185 526
- US-A1- 2010 049 348

## Description

### Technical Field

The present invention relates to the technical field of audio playing, and particularly, to a method and device for playing audio.

### Background of the Related Art

At present, high power consumption of smart cell phones is a user experience problem that perplexes users. Sometimes electricity quantity of one battery will be depleted in less than a day, so the user has to charge it at home every day, which severely impacts the user experience. In addition, repetitive charging will have a strong impact on the service life of battery.

In the prior art, audio playing is one of important aspects of power consumption. For example, there are corresponding ringtones ringing when calls are coming or short messages are received, and listening to music or playing games require audio playing. However, a traditional audio playing is generally to read a corresponding audio file, then decode the audio file and perform audio playing. Because the audio file is required to be decoded whenever audio playing is performed, and massive calculation is required to be performed in the decoding process, power consumption is higher.

The above description is merely used to aid understanding of technical schemes of the present invention, without admitting that the above description belongs to the prior art.

The document US2010049348A1 discloses a method for outputting audio-visual media contents on a mobile electronic device.

The document EP2175450A1 discloses an information processing method.

### Summary of the Invention

A main object of the present invention is to reduce power consumption and extend the service life of battery.

In order to achieve the above object, a method for playing audio provided by the present invention is defined in claim 1.

In addition, in order to achieve the above object, the present invention further provides a device for playing audio as defined in claim 4.

### Brief Description of Drawings

FIG. 1 is a flow chart of a method for playing audio according to an embodiment of the present invention.
FIG. 2 is a detailed flow chart of step S50 in FIG. 1 according to an embodiment.
FIG. 3 is a detailed flow chart of step S50 in FIG. 1 according to another embodiment.
FIG. 4 is a schematic diagram of function modules of a device for playing audio according to an embodiment of the present invention.
FIG. 5 is a detailed schematic diagram of function modules of a processing module in FIG. 4 according to an embodiment.
FIG. 6 is a detailed schematic diagram of function modules of the processing module in FIG. 4 according to another embodiment.

Implementation of the object, function features and advantages of the present invention will be further described in combination with the embodiments and with reference to the accompanying drawings.

### Detailed Description

It should be understood that the specific embodiments described herein are only used to explain the present invention, and not to limit the present invention.

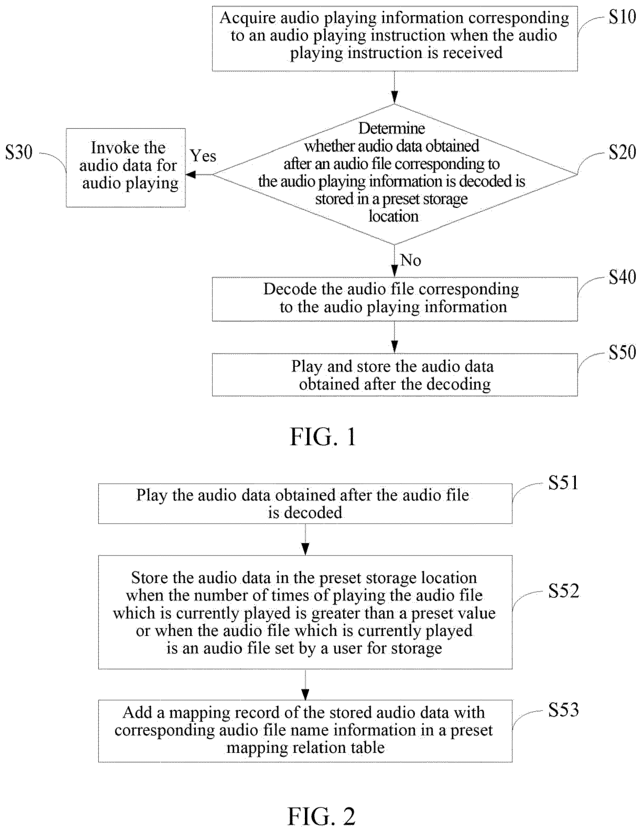

The present invention provides a method for playing audio. With reference to FIG. 1, in an embodiment, the method for playing audio includes the following steps:
In step S10, when an audio playing instruction is received, audio playing information corresponding to the audio playing instruction is acquired.

The method for playing audio provided by the embodiment is mainly applied to mobile phones. The audio playing information described above is name information of an audio file which is required to be played. The name information of the audio file includes a name of the audio file and a corresponding path. When a call is coming or a user plays an audio file on a mobile phone, a player will receive an audio playing instruction sent externally. For example, an incoming call processing module will output an audio playing instruction, which includes audio playing information, when an incoming call is coming, and acquire the audio playing information in the audio playing instruction by parsing the audio playing instruction.

In step S20, whether audio data obtained after an audio file corresponding to the audio playing information is decoded is stored in a preset storage location is determined.

If yes, step S30 is executed, and if no, step S40 is executed.

In step S30, the audio data are invoked to perform audio playing.

In step S40, the audio file corresponding to the audio playing information is decoded.

In step S50, the audio data obtained after the decoding are played and stored.

In the embodiment, the audio data obtained after the audio file is decoded may be set to be stored in the preset storage location. For example, when an audio file 1 is played for the first time, the audio file is decoded, the audio data obtained after the decoding is played, and the audio data obtained after the decoding can also be stored in the preset storage location described above after the decoding is completed. When the audio file is played again, audio playing can be implemented by directly invoking the audio data stored in the preset storage location. Particularly, the preset storage location can be in a built-in SD card or an external SD card in a storage space in a mobile phone.

In the present invention, the audio playing information corresponding to the audio playing instruction is acquired when the audio playing instruction is received; when the audio data obtained after the audio file corresponding to the audio playing information is decoded is stored in the preset storage location, the audio data obtained after the decoding is played directly; and when the audio data obtained after the audio file corresponding to the audio playing information is decoded is not stored in the preset storage location, the audio file is decoded and then played according to a traditional playing method, and then the audio data obtained after the decoding is stored in the preset storage location, such that the audio data can be directly invoked in the preset storage area to be played when the same audio file is played next time, thereby reducing decoding operations of the audio file. Therefore, the present invention may reduce power consumption and extend the service life of battery.

Further, with reference to FIG. 2, based on the embodiment described above, in an embodiment, the step S50 described above includes the following steps:
In step S51, the audio data obtained after the audio file is decoded is played.

In step S52, when the number of times of playing the audio file which is currently played is greater than a preset value or when the audio file which is currently played is an audio file set by a user for storage, the audio data is stored in the preset storage location.

In step S53, a mapping record of the stored audio data with corresponding audio file name information is added in a preset mapping relation table.

It can be understood that contents of the mapping relation table described above may be set according to actual requirements. In an exemplary embodiment, the mapping relation table described above includes: audio file name information, file name information corresponding to the audio data, the number of times of playing the audio data, the occupation space of the audio data and the most recent playing time.

In particular, when the audio data obtained after the audio file corresponding to the audio file name information is decoded is not stored in the preset storage location, the corresponding audio file will be acquired according to the audio file name information, and a decoding program and a decoding monitoring program are started, such that the audio file can be decoded by the decoding program. After the decoding monitoring program monitors that the decoding of the audio file is completed, the audio data obtained after the decoding will be extracted to implement audio playing, and a storage program is invoked to store the audio data in the preset storage location to form a new file. File name information of the new file is the file name information corresponding to the audio data, and includes a file name of the new file and a corresponding path. After the audio data is stored in the preset storage location, a mapping record is added in the preset mapping relation table, such that a one-to-one mapping relation is formed between the audio file name information and the file name information corresponding to the audio data. Whether the audio data obtained after the audio file corresponding to the audio file name information is decoded is stored in the preset storage location can be determined by looking up whether a mapping record corresponding to the audio file name information exists in the mapping relation table. It should be noted that the number of times of playing the audio data described above is used for recording the number of times of playing the audio data through directly invoking the preset storage location, and in particular, the number of times of playing a corresponding audio data can be modified after the audio data is invoked for audio playing. The audio file set by the user for storage as described above is an audio file, such as various short messages and the like, which is designated by the user to be stored in the preset storage location after the audio file is decoded. Since the audio file set by the user for storage is set, the pertinence for storage of the audio data obtained after the audio file is decoded is improved.

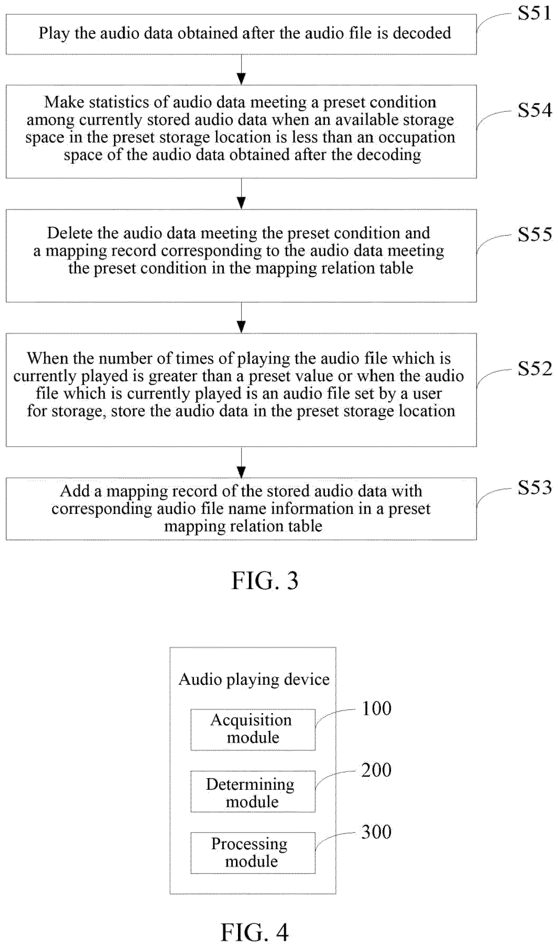

Further, with reference to FIG. 3, based on the embodiment described above, in an embodiment, before execution of the step S52 described above, the following steps are further included:
In step S54, when an available storage space in the preset storage location is less than an occupation space of the audio data obtained after decoding, statistics of audio data meeting a preset condition among currently stored audio data is made.

In step S55, the audio data meeting the preset condition and a mapping record corresponding to the audio data meeting the preset condition in the mapping relation table are deleted.

In the embodiment, a size of the storage space in the preset storage location can be set by the user to be 3G or 5G and the like, for example. When new audio data is stored, whether there is enough storage space in the preset storage location is determined by comparing the available storage space in the preset storage location with the occupation space of the audio data obtained after the decoding. When the available storage space in the preset storage location is greater than or equal to the occupation space of the audio data obtained after the decoding, it means that there is enough storage space in the preset storage location. When the available storage space in the preset storage location is less than the occupation space of the audio data obtained after the decoding, it means that there is not enough storage space in the preset storage location, and at this time, the audio data meeting the preset condition in the preset storage location is deleted, and the corresponding mapping record is deleted in the mapping relation table at the same time.

It can be understood that the preset condition described above may be set according to actual requirements. In an exemplary embodiment, the preset condition described above is that the time difference between the last playing time (i.e., the most recent playing time in the mapping record described above) of the audio data and the current time is greater than a first threshold value and a ratio of the occupation space of the audio data to a corresponding number of times of playing the audio data is greater than a second threshold value. In particular, the step S55 described above includes: screening out audio data of which the time difference between the last playing time of the audio data and the current time is greater than the first threshold value; and deleting the audio data of which the ratio of the occupation space of the audio data to the corresponding number of times of playing the audio data is greater than the second threshold value and a corresponding mapping record according to the screening result. In the embodiment, since the audio data of which the time difference between the last playing time and the current time is greater than the first threshold value and of which the ratio of the occupation space to the corresponding number of times of playing is greater than the second threshold value is deleted, the preset storage location can be optimized, which is beneficial for improving a system operating speed and the storage of new audio data.

The present invention also provides a device for playing audio. With reference to FIG. 4, in an embodiment, the device for playing audio provided by the present invention includes the following modules.

An acquisition module 100 is arranged to acquire audio playing information corresponding to an audio playing instruction when the audio playing instruction is received.

The method for playing audio provided by the embodiment is mainly applied to mobile phones. The audio playing information described above is name information of an audio file which is required to be played. The name information of the audio file includes a name of the audio file and a corresponding path. When a call is coming or a user plays an audio file on a mobile phone, a player will receive an audio playing instruction sent externally. For example, an incoming call processing module will output an audio playing instruction, which includes audio playing information, when an incoming call is coming, and acquire the audio playing information in the audio playing instruction by parsing the audio playing instruction.

A determining module 200 is arranged to determine whether audio data obtained after an audio file corresponding to the audio playing information is decoded is stored in a preset storage location.

A processing module 300 is arranged to invoke the audio data for audio playing when the audio data obtained after the audio file corresponding to the audio playing information is decoded is stored in the preset storage location; and decode the audio file corresponding to the audio playing information, play and store the audio data obtained after the decoding when the audio data obtained after the audio file corresponding to the audio playing information is decoded is not stored in the preset storage location.

In the embodiment, the audio data obtained after the audio file is decoded may be set to be stored in the preset storage location. For example, when an audio file 1 is played for the first time, the audio file is decoded, the audio data obtained after the decoding is played, and the audio data obtained after the decoding can also be stored in the preset storage location described above after the decoding is completed. When the audio file is played again, audio playing can be implemented by directly invoking the audio data stored in the preset storage location. Particularly, the preset storage location can be in a built-in SD card or an external SD card in a storage space in a mobile phone.

In the present invention, the audio playing information corresponding to the audio playing instruction is acquired when the audio playing instruction is received; when the audio data obtained after the audio file corresponding to the audio playing information is decoded is stored in the preset storage location, the audio data obtained after the decoding is played directly; and when the audio data obtained after the audio file corresponding to the audio playing information is decoded is not stored in the preset storage location, the audio file is decoded and then played according to a traditional playing method, and then the audio data obtained after the decoding is stored in the preset storage location, such that the audio data can be directly invoked in the preset storage area to be played when the same audio file is played next time, thereby reducing decoding operations of the audio file. Therefore, the present invention may reduce power consumption and extend the service life of battery.

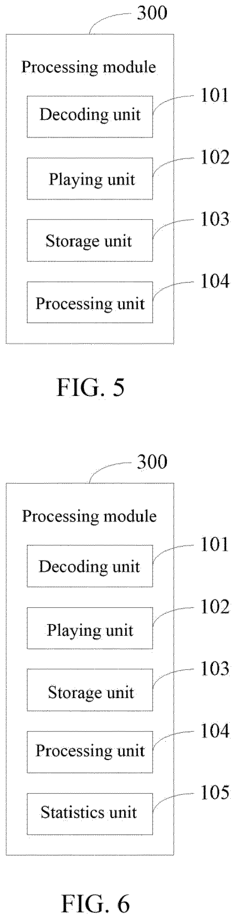

Further, with reference to FIG. 5, based on the embodiment described above, in an embodiment, the processing module 300 described above includes the following units.

A decoding unit 301 is arranged to decode the audio file corresponding to the audio playing information.

A playing unit 302 is arranged to play the audio data obtained after the audio file is decoded.

A storage unit 303 is arranged to store the audio data in the preset storage location when the number of times of playing the audio file which is currently played is greater than a preset value or when the audio file which is currently played is an audio file set by a user for storage.

A processing unit 304 is arranged to add a mapping record of the stored audio data with corresponding audio file name information in a preset mapping relation table.

It can be understood that contents of the mapping relation table described above may be set according to actual requirements. In an exemplary embodiment, the mapping relation table described above includes: audio file name information, file name information corresponding to the audio data, the number of times of playing the audio data, the occupation space of the audio data and the most recent playing time.

In particular, when the audio data obtained after the audio file corresponding to the audio file name information is decoded is not stored in the preset storage location, the corresponding audio file will be acquired according to the audio file name information, and a decoding program and a decoding monitoring program are started by the decoding unit 301, such that the audio file can be decoded by the decoding program. After the decoding monitoring program monitors that the decoding of the audio file is completed, the audio data obtained after the decoding will be extracted by the paying unit 302 to implement audio playing, and a storage program is invoked by the storing unit 303 to store the audio data in the preset storage location to form a new file. File name information of the new file is the file name information corresponding to the audio data, and includes a file name of the new file and a corresponding path. After the audio data is stored in the preset storage location, a mapping record is added by the processing unit 304 in the preset mapping relation table, such that a one-to-one mapping relation is formed between the audio file name information and the file name information corresponding to the audio data. Whether the audio data obtained after the audio file corresponding to the audio file name information is decoded is stored in the preset storage location can be determined by looking up whether a mapping record corresponding to the audio file name information exists in the mapping relation table. It should be noted that the number of times of playing the audio data described above is used for recording the number of times of playing the audio data through directly invoking the preset storage location, and in particular, the number of times of playing a corresponding audio data can be modified after the audio data is invoked for audio playing. The audio file set by the user for storage as described above is an audio file, such as various short messages and the like, which is designated by the user to be stored in the preset storage location after the audio file is decoded. Since the audio file set by the user for storage is set, the pertinence for storage of the audio data obtained after the audio file is decoded is improved.

Further, with reference to FIG. 6, based on the embodiment described above, in an embodiment, the processing module 300 described above further includes a statistics unit 305 arranged to make statistics of audio data meeting a preset condition among currently stored audio data when an available storage space in the preset storage location is less than an occupation space of the audio data obtained after the decoding.

The processing unit 304 is further arranged to delete the audio data meeting the preset condition and a mapping record corresponding to the audio data meeting the preset condition in the mapping relation table.

In the embodiment, a size of the storage space in the preset storage location can be set by the user to be 3G or 5G and the like, for example. When new audio data is stored, whether there is enough storage space in the preset storage location is determined by comparing the available storage space in the preset storage location with the occupation space of the audio data obtained after the decoding. When the available storage space in the preset storage location is greater than or equal to the occupation space of the audio data obtained after the decoding, it means that there is enough storage space in the preset storage location. When the available storage space in the preset storage location is less than the occupation space of the audio data obtained after the decoding, it means that there is not enough storage space in the preset storage location, and at this time, the audio data meeting the preset condition in the preset storage location is deleted, and the corresponding mapping record is deleted in the mapping relation table at the same time.

It can be understood that the preset condition described above may be set according to actual requirements. In an exemplary embodiment, the preset condition described above is that the time difference between the last playing time of the audio data and the current time is greater than a first threshold value and a ratio of the occupation space of the audio data to a corresponding number of times of playing the audio data is greater than a second threshold value. In particular, the processing unit 304 described above is arranged to screen out audio data of which the time difference between the last playing time (i.e., the most recent playing time in the mapping record described above) and the current time is greater than the first threshold value, and delete audio data of which the ratio of the occupation space of the audio data to the corresponding number of times of playing the audio data is greater than the second threshold value and a corresponding mapping record according to the screening result. In the embodiment, since the audio data of which the time difference between the last playing time and the current time is greater than the first threshold value and of which the ratio of the occupation space to the corresponding number of times of playing is greater than the second threshold value is deleted, the preset storage location can be optimized, which is beneficial for improving the system operating speed and the storage of new audio data.

The above description is merely exemplary embodiments of the present invention, and is not intended to limit the protection scope of the present invention. Equivalent structures or equivalent flow transformations made based on contents of the specification and accompanying drawings of the present invention or applied directly or indirectly in other related technical fields are all included in the protection scope of the present invention likewise.

### Industrial Applicability

As mentioned above, through the examples and exemplary embodiments described above, the audio data can be directly invoked in the preset storage area to be played, thereby reducing decoding operations of the audio file. Therefore, the present invention may reduce power consumption and extend the service life of battery.

## Claims

1. A method for playing audio, comprising:
acquiring audio playing information corresponding to an audio playing instruction when the audio playing instruction is received (S10);
determining whether audio data obtained after an audio file corresponding to the audio playing information is decoded is stored in a preset storage location (S20);
invoking the audio data for audio playing when the audio data obtained after the audio file corresponding to the audio playing information is decoded is stored in the preset storage location (S30);
decoding the audio file corresponding to the audio playing information (S40), playing and storing the audio data obtained after the decoding, when the audio data obtained after the audio file corresponding to the audio playing information is decoded is not stored in the preset storage location (S50);
wherein playing and storing the audio data obtained after the decoding comprises:
playing the audio data obtained after the audio file corresponding to the audio playing information is decoded (S51);
**characterized by**, storing the audio data in the preset storage location when a number of times of playing the audio file which is currently played is greater than a preset value (S52); and
adding a mapping record of the stored audio data with audio file name information in a preset mapping relation table (S53); wherein the audio name information includes a file name of the audio file and a corresponding storage path.

2. The method according to claim 1, wherein before storing the audio data in the preset storage location, the method further comprises:
making statistics of audio data meeting a preset condition among currently stored audio data when an available storage space in the preset storage location is less than a current occupation space of the audio data obtained after the decoding; and
deleting the audio data meeting the preset condition and a mapping record corresponding to the audio data meeting the preset condition in the mapping relation table.

3. The method according to claim 2, wherein deleting the audio data meeting the preset condition and a mapping record corresponding to the audio data meeting the preset condition in the mapping relation table comprises:
screening out audio data of which a time difference between a last playing time of the audio data and a current time is greater than a first threshold value; and
deleting audio data of which a ratio of occupation space of the audio data to a corresponding number of times of playing the audio data is greater than a second threshold value and a corresponding mapping record according to a result of the screening.

4. A device for playing audio, comprising:
an acquisition module (100), arranged to acquire audio playing information corresponding to an audio playing instruction when the audio playing instruction is received;
a determining module (200), arranged to determine whether audio data obtained after an audio file corresponding to the audio playing information is decoded is stored in a preset storage location; and
a processing module (300), arranged to invoke the audio data for audio playing when the audio data obtained after the audio file corresponding to the audio playing information is decoded is stored in the preset storage location;
wherein the processing module (300) is further arranged to decode the audio file corresponding to the audio playing information, play and store the audio data obtained after the decoding, when the audio data obtained after the audio file corresponding to the audio playing information is decoded is not stored in the preset storage location;
wherein the processing module comprises:
a decoding unit (101), arranged to decode the audio file corresponding to the audio playing information;
a playing unit (102), arranged to play the audio data obtained after the audio file is decoded;
**characterized by**, a storage unit (103), arranged to store the audio data in the preset storage location when a number of times of playing the audio file which is currently played is greater than a preset value; and
a processing unit (104), arranged to add a mapping record of the stored audio data with audio file name information in a preset mapping relation table; wherein the audio name information includes a file name of the audio file and a corresponding storage path.

5. The device according to claim 4, wherein the processing module further comprises:
a statistics unit (105), arranged to make statistics of audio data meeting a preset condition among currently stored audio data when an available storage space in the preset storage location is less than an occupation space of the audio data obtained after the decoding; and
the processing unit (104) is further arranged to delete the audio data meeting the preset condition and a mapping record corresponding to the audio data meeting the preset condition in the mapping relation table.

6. The device according to claim 5, wherein the processing unit (104) is further arranged to screen out audio data of which a time difference between a last playing time of the audio data and a current time is greater than a first threshold value, and delete audio data of which a ratio of occupation space of the audio data to a corresponding number of times of playing the audio data is greater than a second threshold value and a corresponding mapping record according to a result of the screening.

## Patentansprüche

1. Audiowiedergabeverfahren, umfassend:
Erfassen von Audiowiedergabeinformationen, die einer Audiowiedergabeanweisung entsprechen, wenn die Audiowiedergabeanweisung empfangen wird (S10);
Bestimmen, ob die nach Dekodierung einer den Audiowiedergabeinformationen entsprechenden Audiodatei erhaltenen Audiodaten in einem voreingestellten Speicherort (S20) gespeichert werden;
Aufrufen der Audiodaten zur Audiowiedergabe, wenn die nach Dekodierung einer den Audiowiedergabeinformationen entsprechenden Audiodatei erhaltenen Audiodaten in dem voreingestellten Speicherort (S30) gespeichert werden;
Dekodieren der den Audiowiedergabeinformationen (S40) entsprechenden Audiodatei, Wiedergeben und Speichern der nach dem Dekodieren erhaltenen Audiodaten, wenn die Audiodaten, die nach dem Dekodieren der den Audiowiedergabeinformationen entsprechenden Audiodatei erhalten wurden, nicht in dem voreingestellten Speicherort (S50) gespeichert werden;
wobei das Wiedergeben und Speichern der nach dem Dekodieren erhaltenen Audiodaten umfasst:
Wiedergeben der nach dem Dekodieren der den Audiowiedergabeinformationen (S51) entsprechenden Audiodatei erhaltenen Audiodaten;
**gekennzeichnet durch** Speichern der Audiodaten in dem voreingestellten Speicherort, wenn eine Anzahl von Malen der Wiedergabe der aktuell wiedergegebenen Audiodatei größer als ein voreingestellter Wert (S52) ist; und
Hinzufügen einer Zuordnungsaufzeichnung der gespeicherten Audiodaten mit Audiodateinameninformationen in einer voreingestellten Zuordnungsbeziehungstabelle (S53); wobei die Audionameninformationen einen Dateinamen der Audiodatei und einen entsprechenden Speicherpfad aufweisen.

2. Verfahren nach Anspruch 1, wobei das Verfahren vor dem Speichern der Audiodaten in dem voreingestellten Speicherort ferner umfasst:
Erstellen von Statistiken von Audiodaten, die unter den aktuell gespeicherten Audiodaten eine voreingestellte Bedingung erfüllen, wenn ein verfügbarer Speicherplatz in dem voreingestellten Speicherort kleiner als ein aktueller Besetzungsplatz der nach dem Dekodieren erhaltenen Audiodaten ist; und
Löschen der Audiodaten, die die voreingestellte Bedingung und eine Zuordnungaufzeichnung erfüllen, die den Audiodaten entspricht, die der voreingestellten Bedingung in der Zuordnungsbeziehungstabelle entsprechen.

3. Verfahren nach Anspruch 2, wobei das Löschen der Audiodaten, die die voreingestellte Bedingung und eine Zuordnungaufzeichnung erfüllen, die den Audiodaten entspricht, die der voreingestellten Bedingung in der Zuordnungsbeziehungstabelle entsprechen, Folgendes umfasst:
Filtern von Audiodaten, bei denen ein Zeitunterschied zwischen einem letzten Mal der Wiedergabe der Audiodaten und einem aktuellen Mal größer als ein erster Schwellenwert ist; und
Löschen von Audiodaten, deren Besetzungsplatzverhältnis der Audiodaten zu einer entsprechenden Anzahl von Malen der Wiedergabe der Audiodaten größer als ein zweiter Schwellenwert und eine entsprechende Zuordnungsaufzeichnung gemäß einem Filterergebnis ist.

4. Vorrichtung zur Audiowiedergabe, umfassend:
ein Erfassungsmodul (100), das angeordnet ist, um einer Audiowiedergabeanweisung entsprechende Audiowiedergabeinformationen zu erfassen, wenn die Audiowiedergabeanweisung empfangen wird;
ein Bestimmungsmodul (200), das angeordnet ist, um zu bestimmen, ob die nach Dekodierung einer den Audiowiedergabeinformationen entsprechenden Audiodatei erhaltenen Audiodaten in einem voreingestellten Speicherort gespeichert werden; und
ein Verarbeitungsmodul (300), das angeordnet ist, um die Audiodaten zur Audiowiedergabe aufzurufen, wenn die nach Dekodierung einer den Audiowiedergabeinformationen entsprechenden Audiodatei erhaltenen Audiodaten in einem voreingestellten Speicherort gespeichert werden;
wobei das Verarbeitungsmodul (300) ferner angeordnet ist, um die den Audiowiedergabeinformationen entsprechende Audiodatei zu dekodieren, wiederzugeben und die nach dem Dekodieren erhaltenen Audiodaten zu speichern, wenn die Audiodaten, die nach dem Dekodieren der den Audiowiedergabeinformationen entsprechenden Audiodatei erhalten wurden, nicht in dem voreingestellten Speicherort gespeichert werden;
wobei das Verarbeitungsmodul umfasst:
eine Dekodiereinheit (101), die angeordnet ist, um die den Audiowiedergabeinformationen entsprechende Audiodatei zu dekodieren;
eine Wiedergabeeinheit (102), die angeordnet ist, um die nach dem Dekodieren der Audiodatei erhaltenen Audiodaten wiederzugeben;
**gekennzeichnet durch** eine Speichereinheit (103), die angeordnet ist, um die Audiodaten in dem voreingestellten Speicherort zu speichern, wenn eine Anzahl von Malen der Wiedergabe der aktuell wiedergegebenen Audiodatei größer als ein voreingestellter Wert ist; und
eine Verarbeitungseinheit (104), die angeordnet ist, um eine Zuordnungsaufzeichnung der gespeicherten Audiodaten mit Audiodatei-Namensinformationen einer voreingestellten Zuordnungsbeziehungstabelle hinzuzufügen, wobei die Audiodatei-Namensinformationen einen Dateinamen der Audiodatei und einen entsprechenden
Speicherpfad aufweisen.

5. Vorrichtung nach Anspruch 4, wobei das Verarbeitungsmodul ferner umfasst:
eine Statistikeinheit (105), die angeordnet ist, um Statistiken von Audiodaten zu erstellen, die unter den aktuell gespeicherten Audiodaten eine voreingestellte Bedingung erfüllen, wenn ein verfügbarer Speicherplatz in dem voreingestellten Speicherort kleiner als ein Besetzungsplatz der nach dem Dekodieren erhaltenen Audiodaten ist; und
die Verarbeitungseinheit (104) ferner angeordnet ist, um die Audiodaten zu löschen, die die voreingestellte Bedingung und eine Zuordnungaufzeichnung erfüllen, die den Audiodaten entspricht, die der voreingestellten Bedingung in der Zuordnungsbeziehungstabelle entsprechen.

6. Vorrichtung nach Anspruch 5, wobei die Verarbeitungseinheit (104) ferner angeordnet ist, um die Audiodaten zu filtern, bei denen ein Zeitunterschied zwischen einem letzten Mal der Wiedergabe der Audiodaten und einem aktuellen Mal größer als ein erster Schwellenwert ist, und Audiodaten zu löschen, deren Besetzungsplatzverhältnis der Audiodaten zu einer entsprechenden Anzahl von Malen der Wiedergabe der Audiodaten größer als ein zweiter Schwellenwert und eine entsprechende Zuordnungsaufzeichnung gemäß einem Filterergebnis ist.

## Revendications

1. Procédé de lecture audio comprenant :
l'acquisition d'informations de lecture audio correspondant à une instruction de lecture audio quand l'instruction de lecture audio est reçue (S10) ;
le fait de déterminer si des données audio obtenues après qu'un fichier audio correspondant aux informations de lecture audio est décodé sont stockées dans un emplacement de stockage prédéfini (S20) ;
l'invocation des données audio pour la lecture audio quand les données audio obtenues après que le fichier audio correspondant aux informations de lecture audio est décodé sont stockées dans l'emplacement de stockage prédéfini (S30) ;
le décodage du fichier audio correspondant aux informations de lecture audio (S40), la lecture et le stockage des données audio obtenues après le décodage, quand les données audio obtenues après que le fichier audio correspondant aux informations de lecture audio est décodé ne sont pas stockées dans l'emplacement de stockage prédéfini (S50) ;
dans lequel la lecture et le stockage des données audio obtenues après le décodage comprennent :
la lecture des données audio obtenues après que le fichier audio correspondant aux informations de lecture audio est décodé (S51) ;
**caractérisé par** le stockage des données audio dans l'emplacement de stockage prédéfini quand un nombre de fois de lecture du fichier audio qui est lu actuellement est supérieur à une valeur prédéfinie (S52) ; et
l'ajout d'un enregistrement de mise en correspondance des données audio stockées avec des informations de nom de fichier audio dans une table de relation de mise en correspondance prédéfinie (S53) ; dans lequel les informations de nom audio comprennent un nom de fichier du fichier audio et d'un parcours de stockage correspondant.

2. Procédé selon la revendication 1, dans lequel, avant le stockage des données audio dans l'emplacement de stockage prédéfini, le procédé comprend en outre :
l'exécution de statistiques de données audio satisfaisant une condition prédéfinie parmi des données audio actuellement stockées quand un espace de stockage disponible dans l'emplacement de stockage prédéfini est inférieur à un espace d'occupation actuel des données audio obtenues après le décodage ; et
la suppression des données audio satisfaisant la condition prédéfinie et d'un enregistrement de mise en correspondance correspondant aux données audio satisfaisant la condition prédéfinie dans la table de relation de mise en correspondance.

3. Procédé selon la revendication 2, dans lequel la suppression des données audio satisfaisant la condition prédéfinie et d'un enregistrement de mise en correspondance correspondant aux données audio satisfaisant la condition prédéfinie dans la table de relation de mise en correspondance comprend :
le filtrage de données audio pour lesquelles une différence de temps entre un dernier temps de lecture des données audio et un temps actuel est supérieure à une première valeur de seuil ; et
la suppression de données audio pour lesquelles un rapport d'espace d'occupation des données audio avec un nombre de fois correspondant de lecture des données audio est supérieur à une deuxième valeur de seuil et d'un enregistrement de mise en correspondance correspondant en fonction d'un résultat du filtrage.

4. Dispositif de lecture audio comprenant :
un module d'acquisition (100), agencé pour acquérir des informations de lecture audio correspondant à une instruction de lecture audio quand l'instruction de lecture audio est reçue ;
un module de détermination (200), agencé pour déterminer si des données audio obtenues après qu'un fichier audio correspondant aux informations de lecture audio est décodé sont stockées dans un emplacement de stockage prédéfini ; et
un module de traitement (300), agencé pour invoquer les données audio pour la lecture audio quand les données audio obtenues après que le fichier audio correspondant aux informations de lecture audio est décodé sont stockées dans l'emplacement de stockage prédéfini ;
dans lequel le module de traitement (300) est agencé en outre pour décoder le fichier audio correspondant aux informations de lecture audio, lire et stocker les données audio obtenues après le décodage, quand les données audio obtenues après que le fichier audio correspondant aux informations de lecture audio est décodé ne sont pas stockées dans l'emplacement de stockage prédéfini ;
dans lequel le module de traitement comprend :
une unité de décodage (101) agencée pour décoder le fichier audio correspondant aux informations de lecture audio ;
une unité de lecture (102) agencée pour lire les données audio obtenues après que le fichier audio est décodé ;
**caractérisé par** une unité de stockage (103) agencée pour stocker les données audio dans l'emplacement de stockage prédéfini quand un nombre de fois de lecture du fichier audio qui est lu actuellement est supérieur à une valeur prédéfinie ; et
une unité de traitement (104) agencée pour ajouter un enregistrement de mise en correspondance des données audio stockées avec des informations de nom de fichier audio dans une table de relation de mise en correspondance prédéfinie ; dans lequel les informations de nom audio comprennent un nom de fichier du fichier audio et d'un parcours de stockage correspondant.

5. Dispositif selon la revendication 4, dans lequel le module de traitement comprend en outre :
une unité de statistique (105) agencée pour exécuter des statistiques de données audio satisfaisant une condition prédéfinie parmi des données audio actuellement stockées quand un espace de stockage disponible dans l'emplacement de stockage prédéfini est inférieur à un espace d'occupation des données audio obtenues après le décodage ; et
l'unité de traitement (104) est agencée en outre pour supprimer les données audio satisfaisant la condition prédéfinie et un enregistrement de mise en correspondance correspondant aux données audio satisfaisant la condition prédéfinie dans la table de relation de mise en correspondance.

6. Dispositif selon la revendication 5, dans lequel l'unité de traitement (104) est agencée en outre pour filtrer des données audio pour lesquelles une différence de temps entre un dernier temps de lecture des données audio et un temps actuel est supérieure à une première valeur de seuil, et supprimer des données audio pour lesquelles un rapport d'espace d'occupation des données audio avec un nombre de fois correspondant de lecture des données audio est supérieur à une deuxième valeur de seuil et d'un enregistrement de mise en correspondance correspondant en fonction d'un résultat du filtrage.
